# EUROPEAN PATENT APPLICATION

(11) **EP 4 761 369 A1**
(43) Date of publication of application: **17.06.2026**
(21) Application number: 23948082.5
(22) Date of filing: 10.08.2023
(51) Int. Cl.: H04W 36/30

(54) **CHANNEL SWITCHING METHODS, ACCESS POINT DEVICES, STATION DEVICES AND COMMUNICATION SYSTEM**

(71) Applicant: Beijing Xiaomi Mobile Software Co., Ltd., Beijing 100085 (CN)
(72) Inventor: DONG, Xiandong, Beijing 100085 (CN)
(74) Representative: Stöckeler, Ferdinand
(86) International application number: PCT/CN2023/112313
(87) International publication number: WO 2025/030509

(57) **Abstract**

The embodiments of the present disclosure relate to channel switching methods, access point (AP) devices, station (STA) devices and a communication system. A channel switching method comprises: when an AP device senses that a main channel for communication with an STA device is in an OBSS busy state, switching to an auxiliary channel to communicate with the STA device, wherein a communication duration of the auxiliary channel is set to be less than or equal to a duration set by an NAV of the main channel. By means of switching to the auxiliary channel to communicate with the STA device, the throughput of the communication system is improved, and channel resource utilization is maximized; and by means of setting the communication duration of the auxiliary channel to be less than or equal to the duration set by the NAV of the main channel, other WLAN devices are prevented from contending for a channel within the communication duration and thus interfering with communication between the AP device and the STA device on the auxiliary channel.

## Description

### TECHNICAL FIELD

The present disclosure relates to the field of communication technology, and particularly to a method for channel switching, an access point (AP), a station (STA), and a communication system.

### BACKGROUND

Currently, content studied by Wi-Fi technology, for example, ultra high reliability (UHR), aims to improve reliability of a wireless local area network (WLAN) connection, reduce latency, enhance manageability, increase throughput at different signal to noise ratio (SNR) levels, and reduce device-level power consumption.

In the UHR, to fully utilize a channel resource, a WLAN device is supported to communicate on a secondary channel. Therefore, a mechanism for the WLAN device to communicate on the secondary channel may be further improved to meet transmission requirements of the UHR.

### SUMMARY

Embodiments of the present disclosure provide a method for channel switching, an access point (AP), a station (STA), and a communication system, to improve a mechanism for a wireless local area network (WLAN) device to communicate on a secondary channel.

According to one aspect, embodiments of the present disclosure provide a method for channel switching, including: in a case that an AP perceives that a primary channel for communication with an STA is in an overlapping basic service set (OBSS) busy state, switching to a secondary channel to communicate with the STA, in which a communication duration of the secondary channel is set to be less than or equal to a time length set by a network allocation vector (NAV) of the primary channel.

According to another aspect, embodiments of the present disclosure further provide a method for channel switching, including: in a case that an STA perceives that a primary channel for communication with an AP is in an OBSS busy state, switching to a secondary channel to communicate with the AP, in which a communication duration of the secondary channel is set to be less than or equal to a time length set by an NAV of the primary channel.

According to another aspect, embodiments of the present disclosure further provide an AP, including: a first switching module, configured to: in a case that the AP perceives that a primary channel for communication with an STA is in an OBSS busy state, switch to a secondary channel to communicate with the STA, in which a communication duration of the secondary channel is set to be less than or equal to a time length set by an NAV of the primary channel.

According to another aspect, embodiments of the present disclosure further provide an STA, including: a second switching module, configured to: in a case that the STA perceives that a primary channel for communication with an AP is in an OBSS busy state, switch to a secondary channel to communicate with the AP, in which a communication duration of the secondary channel is set to be less than or equal to a time length set by an NAV of the primary channel.

According to another aspect, embodiments of the present disclosure further provide an AP, including: one or more processors, in which the AP is configured to implement the method for channel switching described in embodiments of the present disclosure.

According to another aspect, embodiments of the present disclosure further provide an STA, including: one or more processors, in which the STA is configured to implement the method for channel switching described in embodiments of the present disclosure.

Embodiments of the present disclosure further provide a communication system, including an AP and an STA, in which the AP is configured to implement the method for channel switching described in embodiments of the present disclosure, and the STA is configured to implement the method for channel switching described in embodiments of the present disclosure.

Embodiments of the present disclosure further provide a storage medium for storing instructions. When the instructions are performed on a communication device, the communication device is caused to implement the method for channel switching described in embodiments of the present disclosure, or implement the method for channel switching described in embodiments of the present disclosure.

In embodiments of the present disclosure, in a case that the AP perceives that the primary channel for communication with the STA is in the OBSS busy state, the AP switches to the secondary channel to communicate with the STA, thus improving throughput of the communication system and maximizing utilization of a channel resource; and the communication duration of the secondary channel is set to be less than or equal to the time length set by the NAV of the primary channel, to prevent other WLAN devices from contending for a channel within the duration and interfering with the communication between the AP and the STA on the secondary channel.

Additional aspects and advantages of embodiments of present disclosure are given in part in the following descriptions, become apparent in part from the following descriptions, or be learned from the practice of embodiments of the present disclosure.

### BRIEF DESCRIPTION OF THE DRAWINGS

In order to more clearly illustrate the technical solution in embodiments of the disclosure, the accompanying drawings to be used in embodiments of the disclosure are described below. The following drawings are only some embodiments of the present disclosure, and do not constitute a limitation on the protection scope of the present disclosure.
FIG. 1 is a schematic diagram of an architecture of a communication system according to an embodiment of the present disclosure.
FIG. 2 is a first schematic diagram of an interaction of a method according to an embodiment of the present disclosure.
FIG. 3 is a third schematic diagram of an interaction of a method according to an embodiment of the present disclosure.
FIG. 4 is a first flowchart of a method for channel switching according to an embodiment of the present disclosure.
FIG. 5 is a second flowchart of a method for channel switching according to an embodiment of the present disclosure.
FIG. 6 is a second schematic diagram of an interaction of a method according to an embodiment of the present disclosure.
FIG. 7 is a fourth schematic diagram of an interaction of a method according to an embodiment of the present disclosure.
FIG. 8 is a block diagram of an access point (AP) according to an embodiment of the present disclosure.
FIG. 9 is a block diagram of a station (STA) according to an embodiment of the present disclosure.
FIG. 10 is a block diagram of a terminal according to an embodiment of the present disclosure.
FIG. 11 is a block diagram of a chip according to embodiments of the present disclosure.

### DETAILED DESCRIPTION

Embodiments of the present disclosure provide a method for channel switching, an access point (AP), a station (STA), and a communication system.

According to a first aspect, embodiments of the present disclosure provide a method for channel switching, including: in a case that an AP perceives that a primary channel for communication with an STA is in an overlapping basic service set (OBSS) busy state, switching to a secondary channel to communicate with the STA, in which a communication duration of the secondary channel is set to be less than or equal to a time length set by a network allocation vector (NAV) of the primary channel.

In the above embodiments, when the primary channel is in the OBSS busy state, it is switched to the primary channel to the secondary channel to communicate with the STA, thus improving throughput of the communication system and maximizing utilization of a channel resource; and the communication duration of the secondary channel is set to be less than or equal to the time length set by the NAV of the primary channel, to prevent other WLAN devices from contending for a channel within the duration and interfering with the communication between the AP and the STA on the secondary channel.

In some embodiments in combination with the first aspect, in some embodiments, in response to perceiving that the secondary channel is in an idle state, communication with the STA is performed on the secondary channel; or, in response to perceiving that the secondary channel is in a busy state, a random backoff operation is performed.

In the above embodiments, when it is determined to switch to the secondary channel for communication, perceiving is continued to determine whether the secondary channel is in the idle state. For example, the busy state of the secondary channel is still perceived via a clear channel assessment (CCA) operation or an NAV operation.

In some embodiments in combination with the first aspect, in some embodiments, communicating with the STA on the secondary channel includes: sending a first request-to-send (RTS) frame to the STA, in which a duration of the first RTS frame is set to the communication duration of the secondary channel.

In the above embodiments, after switching to the secondary channel, the first RTS frame is sent to the STA, and the duration (duration field) of the first RTS frame is set to the communication duration of the secondary channel to indicate the STA to send a data frame within the communication duration.

In some embodiments in combination with the first aspect, in some embodiments, performing the random backoff operation includes: in a case that a window duration of the random backoff operation is greater than an NAV duration set for the primary channel, or a sum of the window duration of the random backoff operation and a duration required for data transmission is greater than the NAV duration set for the primary channel, abandoning current communication on the secondary channel and/or switching to the primary channel for state perception; or, in a case that a window duration of the random backoff operation is less than or equal to an NAV duration set for the primary channel, continuing to perceive a state of the secondary channel.

In the above embodiments, when perceiving that the secondary channel is in the busy state, the AP 102 delays an access and uses an exponential backoff algorithm to avoid a collision, and waits until a connection becomes idle again, thus forming access deferral, this process is a random backoff process.

In some embodiments in combination with the first aspect, in some embodiments, switching to the secondary channel to communicate with the STA includes: in a case that the NAV duration set for the primary channel is increased during communication with the STA on the secondary channel, continuing to communicate with the STA on the secondary channel after completion of current communication with the STA.

In the above embodiments, during communication on the secondary channel, if an NAV setting of the primary channel changes, for example, if it is determined, based on OBSS communication, that an NAV duration becomes longer, both parties may continue to communicate on the secondary channel after completion of the communication, so as to improve system throughput.

In some embodiments in combination with the first aspect, in some embodiments, the method further includes: during an initial association procedure, sending a first wireless frame to the STA, in which the first wireless frame includes first identification information, and the first identification information indicates capability information of the AP for communicating on the secondary channel; and the capability information includes whether the AP supports switching to the secondary channel for communication when the primary channel is in the OBSS busy state.

In the above embodiments, the first identification information indicates whether the AP supports switching to the secondary channel for the communication when the primary channel is in the OBSS busy state, which facilitates the STA or other WLAN devices to determine, after receiving the first wireless frame, based on the first identification information, whether the AP switches to the secondary channel for communication when the primary channel is in the OBSS busy state.

In some embodiments in combination with the first aspect, in some embodiments, the method further includes: during an initial association procedure, receiving a second wireless frame sent by the STA, in which the second wireless frame includes second identification information, and the second identification information indicates capability information of the STA for communicating on the secondary channel, and the capability information includes whether the STA supports switching to the secondary channel for communication when the primary channel is in the OBSS busy state.

In the above embodiments, after receiving the second wireless frame sent by the STA, the STA indicates, via the second identification information, whether the STA supports switching to the secondary channel for the communication when the primary channel is in the OBSS busy state, which facilitates the AP or other WLAN devices to determine, after receiving the second wireless frame, based on the second identification information, whether the STA switches to the secondary channel for communication when the primary channel is in the OBSS busy state.

In some embodiments in combination with the first aspect, in some embodiments, the method further includes at least one of: during the initial association procedure, negotiating parameter information of the secondary channel with the STA via the first wireless frame; or, after completion of the initial association procedure, negotiating parameter information of the secondary channel with the STA via a newly defined wireless frame.

In the above embodiments, the parameter information of the secondary channel may be negotiated during the association procedure. For example, the parameter information may be carried in an ultra high reliability (UHR) information element or a UHR operation information element. For example, in the first wireless frame, the parameter information of the secondary channel may be implicitly indicated by the first identification information in the UHR information element as a parameter established between the AP and the STA during the initial association procedure. Taking a bandwidth parameter as an example, if the first identification information indicates that the AP supports switching to the secondary channel for the communication when the primary channel is in the OBSS busy state, and a bandwidth of the secondary channel negotiated between the AP and the STA during the initial association procedure is 20 MHz, the bandwidth of the secondary channel is also 20 MHz.

In some embodiments in combination with the first aspect, in some embodiments, the parameter information of the secondary channel includes bandwidth information, and the bandwidth information is an operating bandwidth established during the initial association procedure.

In the above embodiments, for example, if the bandwidth of the secondary channel negotiated between the AP and the STA during the initial association procedure is 20 MHz, the bandwidth of the secondary channel is also 20 MHz.

According to a second aspect, embodiments of the present disclosure provide a method for channel switching, including: in a case that an STA perceives that a primary channel for communication with an AP is in an OBSS busy state, switching to a secondary channel to communicate with the AP, in which a communication duration of the secondary channel is set to be less than or equal to a time length set by an NAV of the primary channel.

In some embodiments in combination with the second aspect, in some embodiments, switching to the secondary channel to communicate with the AP includes: in response to perceiving that the secondary channel is in an idle state, communicating with the AP on the secondary channel; or, in response to perceiving that the secondary channel is in a busy state, performing a random backoff operation.

In some embodiments in combination with the second aspect, in some embodiments, communicating with the AP on the secondary channel includes: sending a second RTS frame to the AP, in which a duration of the second RTS frame is set to the communication duration of the secondary channel.

In some embodiments in combination with the second aspect, in some embodiments, performing the random backoff operation includes: in a case that a window duration of the random backoff operation is greater than an NAV duration set for the primary channel, or a sum of the window duration of the random backoff operation and a duration required for data transmission is greater than the NAV duration set for the primary channel, abandoning current communication on the secondary channel and/or switching to the primary channel for state perception; or, in a case that a window duration of the random backoff operation is less than or equal to an NAV duration set for the primary channel, continuing to perceive a state of the secondary channel.

In some embodiments in combination with the second aspect, in some embodiments, switching to the secondary channel to communicate with the AP includes: in a case that the NAV duration set for the primary channel is increased during communication with the AP on the secondary channel, continuing to communicate with the AP on the secondary channel after completion of current communication with the AP.

In some embodiments in combination with the second aspect, in some embodiments, the method further includes: during an initial association procedure, receiving a first wireless frame sent by the AP, in which the first wireless frame includes first identification information, and the first identification information indicates capability information of the AP for communicating on the secondary channel; and the capability information includes whether the AP supports switching to the secondary channel for communication when the primary channel is in the OBSS busy state.

In some embodiments in combination with the second aspect, in some embodiments, the method further includes: during an initial association procedure, sending a second wireless frame to the AP, in which the second wireless frame includes second identification information, and the second identification information indicates capability information of the STA for communicating on the secondary channel; and the capability information includes whether the STA supports switching to the secondary channel for communication when the primary channel is in the OBSS busy state.

In some embodiments in combination with the second aspect, in some embodiments, the method further includes at least one of: during the initial association procedure, negotiating parameter information of the secondary channel with the AP via the second wireless frame; or, after completion of the initial association procedure, negotiating parameter information of the secondary channel with the AP via a newly defined wireless frame.

In some embodiments in combination with the second aspect, in some embodiments, the parameter information of the secondary channel includes bandwidth information, and the bandwidth information is an operating bandwidth established during the initial association procedure.

According to a third aspect, embodiments of the present disclosure further provide an AP, including at least one of a determining module or a sending module, in which the AP is configured to implement any optional implementation of the first aspect.

According to a fourth aspect, embodiments of the present disclosure further provide a STA, including: a first receiving module, in which the STA is configured to implement any optional implementation of the second aspect.

According to a fifth aspect, embodiments of the present disclosure further provide an AP, including: one or more processors, in which the AP is configured to implement any optional implementation of the first aspect.

According to a sixth aspect, embodiments of the present disclosure further provide a STA, including: one or more processors, in which the STA is configured to implement any optional implementation of the second aspect.

According to a seventh aspect, embodiments of the present disclosure further provide a communication system, including an AP and a STA, in which the AP is configured to implement any optional implementation according to the first aspect, and the STA is configured to implement any optional implementation according to the second aspect.

According to an eighth aspect, embodiments of the present disclosure further provide a storage medium for storing instructions. When the instructions are executed on a communication device, the communication device is caused to implement any optional implementation according to the first aspect or the second aspect.

According to a ninth aspect, embodiments of the present disclosure provide a program product. When the program product is executed by a communication device, the communication device is caused to implement the method described in any optional implementation of the first aspect or the second aspect.

According to a tenth aspect, embodiments of the present disclosure provide a computer program. When the computer program is executed on a computer, the computer is caused to implement the method described in any optional implementation of the first aspect or the second aspect.

According to an eleventh aspect, embodiments of the present disclosure provide a chip or a chip system. The chip or the chip system includes a processing circuit configured to implement the method described in any optional implementation of the above first aspect or second aspect.

It may be understood that the AP, the STA, the communication system, the storage medium, the program product, the computer program, the chip or the chip system are all used to implement the method in embodiments of the present disclosure. Therefore, for their achievable beneficial effects reference may be made to the beneficial effects in the corresponding method, which are not repeated here.

Embodiments of the present disclosure provide a method for channel switching, an AP, an STA, and a communication system. In some embodiments, terms such as "method for channel switching", "method for sending a signal", and "method for sending a wireless frame" may be used interchangeably; and terms such as "system for processing information" and "communication system" may be used interchangeably.

Embodiments of the present disclosure are not exhaustive and only serve as illustrations of some embodiments, but not as specific limitations to the protection scope of the present disclosure. When there is no contradiction, each step in an embodiment may be implemented as an independent embodiment, and steps may be arbitrarily combined. For example, a solution obtained by removing some steps from an embodiment may also be implemented as an independent embodiment. An order of steps in an embodiment may be arbitrarily exchanged. In addition, optional implementations in an embodiment may be arbitrarily combined. Furthermore, different embodiments may be arbitrarily combined. For example, some or all steps of different embodiments may be arbitrarily combined, and an embodiment may be arbitrarily combined with optional implementations of other embodiments.

In various embodiments of the present disclosure, unless otherwise specified or there is no logical conflict, terms and/or descriptions are consistent in all embodiments and reference may be made to each other. Technical features from different embodiments may be combined to form a new embodiment based on their inherent logical relationships.

The terms used in embodiments of the present disclosure are for a purpose of describing specific embodiments only and are not intended to limit the present disclosure.

In embodiments of the present disclosure, "a plurality of" means two or more.

In some embodiments, terms such as "at least one of", "one or more", "a plurality of', "multiple", etc. may be used interchangeably.

In some embodiments, expressions such as "at least one of A or B", "A and/or B", "in a case A, in another case B", and "in response to a case A, in response to another case B" in the present disclosure, depending on situations, may include at least one of the following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more parts such as A, B, C, etc.

In some embodiments, expressions such as "A or B", depending on situations, may include the following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The terms such as "first" and "second" added in front of other words in embodiments of the present disclosure are used solely to distinguish different described objects and do not limit a position, a sequence, a priority, a quantity, or content of the described objects. For a statement regarding the described object, reference may be made to claims or descriptions in the context of embodiments and should not constitute other restrictions due to the use of the above terms in front of other words. For example, if the described object is "field", ordinal numbers before the "field" in "first field" and "second field" do not limit a position or a sequence between fields. "First" and "second" do not limit whether modified "fields" are in the same message, nor do an order of the "first field" and the "second field." For another example, if the described object is "level", ordinal numbers before the "level" in "first level" and "second level" do not limit a priority between levels. Furthermore, a quantity of described objects is not limited by the ordinal numbers, which may be one or more. Taking "first device" as an example, there may be one or more "devices". In addition, objects modified by different words may be the same or different. For example, if the described object is an "device", "first device" and "second device" may be the same device or different devices, and their types may be the same or different. Similarly, if the described object is "information", "first information" and "second information" may be same information or different information, and their content may be the same or different.

In some embodiments, "including A", "containing A", "configured to indicate A", or "carrying A" may be interpreted as directly carrying A or indirectly indicating A.

In some embodiments, terms such as "in response to...", "in response to determining...", "in a case that...", "when...", "if...", "in a case of' etc. may be used interchangeably.

In some embodiments, the terms such as "greater than", "greater than or equal to", "not smaller than", "more than", "more than or equal to", "no less than", "higher than", "higher than or equal to", "not lower than", "above", etc. may be used interchangeably. The terms such as "less than", "less than or equal to", "not greater than", "fewer than", "fewer than or equal to", "no more than", "lower than", "lower than or equal to", "not higher than", "below" etc. may also be used interchangeably.

In some embodiments, "device" and "apparatus" may be interpreted as either physical or virtual. Names of them are not limited to those recorded in embodiments. In some cases, it may be understood as "equipment", "device", "circuit", "network element", "node", "function", "unit", "section", "system", "network", "chip", "chip system", "entity", "subject", etc.

In some embodiments, obtaining data, information, etc. shall comply with laws and regulations of a country where it is located.

In some embodiments, data, information, etc. may be obtained with consent of a user.

In addition, each element, each row, or each column in tables of embodiments of the present disclosure may be implemented as an independent embodiment. Any combination of elements, rows, or columns may also be implemented as an independent embodiment.

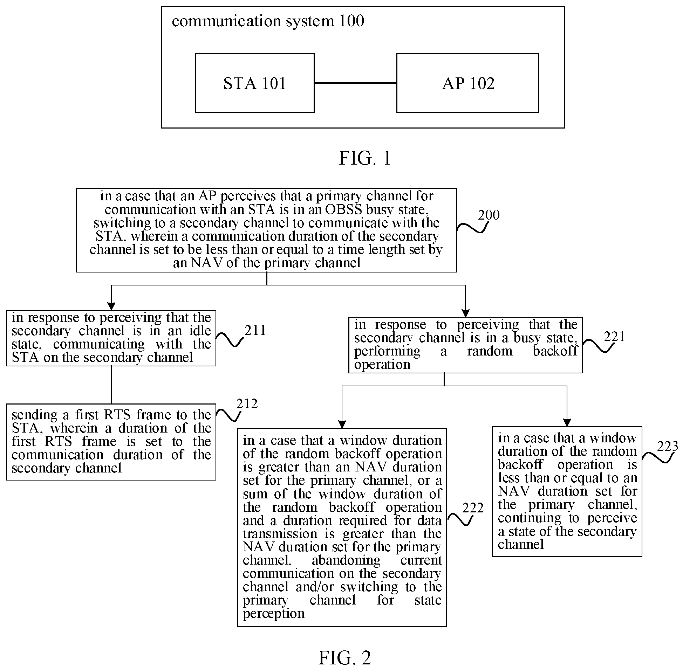

FIG. 1 is a schematic diagram of an architecture of a communication system according to embodiments of the present disclosure.

As shown in FIG. 1, a communication system 100 includes a STA 101 and an AP 102.

In some embodiments, the STA 101 includes, for example, a wireless communication chip supporting a Wi-Fi communication function, a wireless sensor, or a wireless communication terminal. Optionally, the wireless communication terminal includes, for example, at least one of a mobile phone, a wearable device, an internet of things (IoT) device supporting a Wi-Fi communication function, a car with a Wi-Fi communication function, a smart car, a Pad, a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, but is not limited thereto.

Specifically, the STA 101 may be a terminal or a network device with a wireless fidelity (Wi-Fi) chip. Optionally, the STA 101 may support a plurality of WLAN standards such as 802.11ax, 802.11be, 802.11ac, 802.11n, 802.11g, 802.11b, and 802.11a, and a next-generation 802.11 protocol, but is not limited thereto.

In some embodiments, the AP 102 may be an access point for a mobile terminal to enter a wired network. The AP serves as a bridge connecting the wired network and a wireless network. Its main function is to connect various wireless network clients together and then connect the wireless network to the Ethernet. Specifically, the AP may be a terminal or a network device with a Wi-Fi chip. Optionally, the AP may support a plurality of WLAN standards such as 802.11ax, 802.11be, 802.11ac, 802.11n, 802.11g, 802.11b, and 802.11a, and a next-generation 802.11 protocol, but is not limited thereto.

Optionally, in embodiments of the present disclosure, the AP and the STA may be devices supporting a multi-link operation, for example, they may be represented as an AP multi-link device (AP MLD) and a non-AP multi-link device (Non-AP MLD), respectively. The AP MLD may represent an AP supporting a multi-link communication function, and the non-AP MLD may represent a STA supporting a multi-link communication function.

It may be understood that the communication system in embodiments of the disclosure is to clearly explain the technical solutions of embodiments of the disclosure, and does not constitute a limitation on the technical solutions in embodiments of the disclosure. Those skilled in the art know that with evolution of the system architecture and emergence of new service scenarios, the technical solution in embodiments of the disclosure is equally applicable to similar technical problems.

The following embodiments of the present disclosure may be applied to the communication system 100 shown in FIG. 1, or to some entities, but are not limited thereto. Entities in FIG. 1 are illustrative. The communication system may include all or some of the entities in FIG. 1, or may include other entities not shown in FIG. 1. The entities may be in any number and in any form. Each entity may be physical or virtual. Connection relationships between the entities are illustrative. The entities may be unconnected or may be connected. They may be connected in any manner, for example, they may be directly connected or indirectly connected, or may be connected via a wired or wireless way.

Embodiments of the present disclosure may be applied to a wireless local area network (WLAN), for example, a local area network using 802.11 series of protocols. In the WLAN, a basic service set (BSS) is a basic component of the WLAN. A BSS network consists of STAs that have a certain association within a specific coverage area. One scenario of the association is that STAs communicates directly with each other in an ad-hoc network, which is called an independent BSS (IBSS). Another more common scenario is that there is only one central STA dedicated to managing the BSS in the BSS network, which is called an AP, and other STAs in the network are associated with it. Other stations in the BSS network that are not the central STA are called terminals, also referred to as non-AP STAs. Terminals and non-AP STAs are collectively referred to as STAs. When describing an STA, there is no need to distinguish between an AP and a non-AP STA. Within the same BSS network, due to a distance, a transmission power, and other reasons, one STA may be unable to detect other STAs that are far from it, making them hidden nodes to each other.

FIG. 2 is a first schematic diagram of an interaction of a method for channel switching according to embodiments of the present disclosure. As shown in FIG. 2, the method includes steps at S200 to S223.

At S200, in a case that an AP perceives that a primary channel for communication with an STA is in an OBSS busy state, it is switched to a secondary channel to communicate with the STA, in which a communication duration of the secondary channel is set to be less than or equal to a time length set by an NAV of the primary channel. For example, the communication duration of the secondary channel is set to be the time length set by the NAV of the primary channel, or not greater than the time length set by the NAV of the primary channel (the time length set by the NAV is, for example, a perceived busy duration of the primary channel).

In a WLAN, the BSS may consist of an AP and one or more STAs communicating with the AP. When coverage areas of two or more BSSs overlap, an OBSS is formed.

In the WLAN, channels are usually divided into primary channels and secondary channels. The secondary channel may include one or more sub-channels. For example, if channels are divided with 20 MHz as a basic bandwidth unit, when a channel bandwidth is 20 MHz, there is only a primary channel with a bandwidth of 20 MHz. When the channel bandwidth is greater than 20 MHz, the channel includes a channel with a bandwidth of 20 MHz which is the primary channel, and remaining one or more channels with a bandwidth of 20 MHz which are secondary channels. A primary 20 MHz channel is a common channel of operation for stations that are members of the basic service set. Stations in the BSS may compete for channel resources on the primary 20 MHz channel.

During a process of channel contention on the channel, if the primary channel is occupied by other devices in the same OBSS as the AP 102, for example, if other devices send a physical protocol data unit (PPDU) on the primary channel, the primary channel is in the OBSS busy state. The AP 102 may perceive that the primary channel is in the OBSS busy state via a CCA operation, an energy detection (ED) operation, or an NAV operation. If the primary channel is in the OBSS busy state, to fully utilize the channel resource, it switches to the secondary channel to communicate with the STA 101, schedules the STA 101 onto the secondary channel, and performs data transmission and reception with the STA 101 to improve throughput of the communication system and maximize utilization of the channel resource.

Furthermore, the AP 102 also sets the communication duration of the secondary channel to be the time length set by the NAV of the primary channel. After the AP 102 successfully contends for a channel, it may set, using an NAV method, the NAV in a duration field of a media access control (MAC) frame header included in each frame it sends, or set the NAV by decoding a length field in an L-SIG domain of a physical (PHY) preamble, or set the NAV using both of the above two ways, to notify other WLAN devices that a current WLAN device that obtains the channel may use the duration of the channel. Other WLAN devices that hear the frame may remain silent during the duration, i.e., stop contending for the channel or use a backoff mechanism, and attempt an access again after the channel becomes idle. In this way, the communication duration with the STA 101 on the secondary channel is set to be less than or equal to the time length set by the NAV of the primary channel. Since other WLAN devices remain silent and stop contending for the channel during the duration, they do not interfere with the communication between the AP 102 and the STA 101 on the secondary channel.

In embodiments of the present disclosure, the AP 102 perceives that the primary channel for the communication with the STA 101 is in the OBSS busy state and switches to the secondary channel to communicate with the STA, thus improving throughput of the communication system and maximizing utilization of a channel resource; and the communication duration of the secondary channel is set to be less than or equal to the time length set by the NAV of the primary channel, to prevent other WLAN devices from contending for a channel within the duration and interfering with the communication between the AP 102 and the STA 101 on the secondary channel.

After S200, S211 or S221 is executed based on whether the secondary channel is in a busy state.

At S211, in response to perceiving that the secondary channel is in an idle state, communication with the STA is performed on the secondary channel, and S212 is executed.

When determining to switch to the secondary channel for communication, the AP 102 continues to perceive whether the secondary channel is in the idle state. For example, it may perceive the busy state of the secondary channel via a CCA operation or an NAV operation. If the secondary channel is in the idle state, S212 is executed.

At S212, a first RTS frame is sent to the STA, in which a duration of the first RTS frame is set to the communication duration of the secondary channel.

After switching to the secondary channel, the AP 102 sends the first RTS frame to the STA 101. In the RTS frame, a duration (duration field) of the first RTS frame is set as the communication duration of the secondary channel, or a length of a length field that is decoded in an L-SIG domain of a PHY preamble is set as the communication duration of the secondary channel, or the above two are set simultaneously, to indicate the STA 101 to send a data frame within the communication duration.

A duration indicated by the duration field of the first RTS frame is not greater than the NAV duration set for the primary channel, to prevent other WLAN devices from contending for the channel within the duration and interfering with the communication between the AP 102 and the STA 101 on the secondary channel.

**At** S221, in response to perceiving that the secondary channel is in a busy state, a random backoff operation is performed.

If it is perceived that the secondary channel is in the busy state, the AP 102 delays an access and uses an exponential backoff algorithm to avoid a collision, and waits until a connection becomes idle again, thus forming access deferral. This process is a random backoff process.

Specifically, when performing the random backoff operation, the AP 102 does not send data immediately but starts sending the data after a period of time. For example, the AP 102 may randomly select a value (referred to as a random number) within a contending window (CW), i.e., [0, CW duration]. After detecting that the channel is idle in a distributed coordination function inter frame space (DIFS) period, the AP starts counting down, i.e., the random number is decreased by 1 for every slot time (usually 9 microseconds (µs)) of a channel idle period. Before the random number reaches 0, if the channel becomes busy during a slot time, the counting is paused. Afterwards, when the channel switches from busy to idle, the counting resumes. When the random number reaches 0, the AP starts sending data on the channel. Possible values for the CW include 31, 63, 127, 255, 511, and 1023, and corresponding backoff periods may be 279 µs, 567 µs, 1143 µs, 2295 µs, 4599 µs, and 9207 µs, respectively. The distributed coordination function refers to DCF.

In some embodiments, performing the random backoff operation includes performing S222 or S223.

At S222, in a case that a window duration of the random backoff operation is greater than an NAV duration set for the primary channel, or a sum of the window duration of the random backoff operation and a duration required for data transmission is greater than the NAV duration set for the primary channel, current communication on the secondary channel is abandoned and/or it is switched to the primary channel for state perception.

In a case that the window duration of the random backoff operation is greater than the NAV duration set for the primary channel, or the sum of the window duration of the random backoff operation and the duration required for the data transmission is greater than the NAV duration set for the primary channel, the NAV duration may have ended before the random number reaches 0. At this point, other WLAN devices may contend for the channel after the NAV duration ends, which may interfere with the communication between the AP 102 and the STA 101 on the secondary channel. Therefore, in this case, the current communication on the secondary channel is abandoned and/or it is switched to the primary channel for the state perception.

At S223, in a case that a window duration of the random backoff operation is less than or equal to an NAV duration set for the primary channel, it is continued to perceive a state of the secondary channel.

When the window duration of the random backoff operation is less than or equal to the NAV duration set for the primary channel, other WLAN devices do not contend for the channel during the NAV duration and do not interfere with the communication between the AP 102 and the STA 101 on the secondary channel. Therefore, the AP 102 continues to perceive the state of the secondary channel.

In some embodiments, switching to the secondary channel to communicate with the STA includes: in a case that the NAV duration set for the primary channel is increased during communication with the STA on the secondary channel, continuing to communicate with the STA on the secondary channel after completion of current communication with the STA.

During the communication on the secondary channel, if an NAV setting of the primary channel changes, for example, it is determined, based on OBSS communication, that an NAV duration becomes longer, both parties may continue to communicate on the secondary channel after completion of the communication, so as to improve system throughput.

In some embodiments, the method further includes a step at S201.

At S201, during an initial association procedure, a first wireless frame is sent to the STA, in which the first wireless frame includes first identification information, and the first identification information indicates capability information of the AP for communicating on the secondary channel; and the capability information includes whether the AP supports switching to the secondary channel for communication when the primary channel is in the OBSS busy state.

The first wireless frame includes at least one of a beacon frame, a probe response frame, an association response frame, or a re-association response frame. The embodiments of the present disclosure are not limited thereto.

During the initial association procedure, the AP 102 carries the first identification information in the first wireless frame, and the AP 102 indicates, via the first identification information, whether the AP 102 supports switching to the secondary channel for the communication when the primary channel is in the OBSS busy state. This facilitates the STA or other WLAN devices to determine, after receiving the first wireless frame, based on the first identification information, whether the AP 102 switches to the secondary channel for the communication when the primary channel is in the OBSS busy state.

In some embodiments, the method further includes a step at S202.

At S202, during an initial association procedure, a second wireless frame sent by the STA is received, in which the second wireless frame includes second identification information, and the second identification information indicates capability information of the STA for communicating on the secondary channel, and the capability information includes whether the STA supports switching to the secondary channel for communication when the primary channel is in the OBSS busy state.

The second wireless frame includes at least one of a probe request frame, an association request frame, or a re-association request frame. The embodiments of the present disclosure are not limited thereto.

During the initial association procedure, the AP 102 receives the second wireless frame sent by the STA. The STA indicates, via the second identification information, whether the STA supports switching to the secondary channel for the communication when the primary channel is in the OBSS busy state. This facilitates the AP 102 or other WLAN devices to determine, after receiving the second wireless frame, based on the second identification information, whether the STA switches to the secondary channel for the communication when the primary channel is in the OBSS busy state.

In some embodiments, the method further includes a step at S203.

At S203, during the initial association procedure, parameter information of the secondary channel is negotiated with the STA via the first wireless frame.

During the initial association procedure, the AP 102 may negotiate the parameter information of the secondary channel during an association procedure. For example, it may be carried in an UHR information element or a UHR operation information element. For example, in the first wireless frame, the parameter information of the secondary channel may be implicitly indicated by the first identification information in the UHR information element as a parameter established between the AP and the STA during the initial association procedure. Taking a bandwidth parameter as an example, if the first identification information indicates that the AP supports switching to the secondary channel for the communication when the primary channel is in the OBSS busy state, and a bandwidth of the secondary channel negotiated between the AP and the STA during the initial association procedure is 20 MHz, the bandwidth of the secondary channel is also 20 MHz.

In some embodiments, the method further includes a step at S204.

At S204, after completion of the initial association procedure, parameter information of the secondary channel is negotiated with the STA via a newly defined wireless frame.

The AP and the STA may define a new wireless frame to negotiate the parameter information of the secondary channel.

In some embodiments, the parameter information of the secondary channel includes bandwidth information, and the bandwidth information is an operating bandwidth established during the initial association procedure.

For example, if the bandwidth of the secondary channel negotiated between the AP and the STA during the initial association procedure is 20 MHz, the bandwidth of the secondary channel is also 20 MHz.

The method for channel switching in embodiments of the present disclosure may include at least one of above steps or embodiments. For example, S200 may be implemented as an independent embodiment, S211 may be implemented as an independent embodiment, S212 may be implemented as an independent embodiment, S221 may be implemented as an independent embodiment, S222 may be implemented as an independent embodiment, S223 may be implemented as an independent embodiment, S201 may be implemented as an independent embodiment, S202 may be implemented as an independent embodiment, S203 may be implemented as an independent embodiment, and S204 may be implemented as an independent embodiment. The combination of S200 and S211 may be implemented as an independent embodiment, the combination of S200 and S221 may be implemented as an independent embodiment, the combination of S211 and S212 may be implemented as an independent embodiment, the combination of S221 and S222 may be implemented as an independent embodiment, the combination of S221 and S223 may be implemented as an independent embodiment, and the combination of S201 and S202 may be implemented as an independent embodiment, but not limited thereto.

In some embodiments, reference may be made to other optional implementations described before or after the description corresponding to FIG. 2.

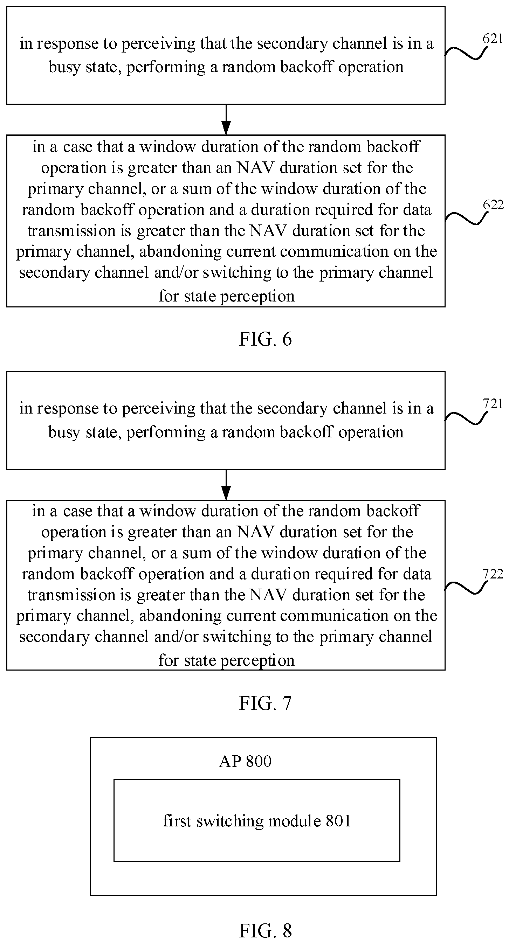

FIG. 6 is a second schematic diagram of an interaction of a method for channel switching according to embodiments of the present disclosure. As shown in FIG. 6, the method includes steps at S621 to S622.

At S621, in response to perceiving that the secondary channel is in a busy state, a random backoff operation is performed.

The AP 102 perceives that the secondary channel is in the busy state. Then, the AP 102 delays an access and uses an exponential backoff algorithm to avoid a collision, and waits until a connection becomes idle again, thus forming access deferral, and this process is a random backoff process.

Specifically, when performing the random backoff operation, the AP 102 does not send data immediately but starts sending the data after a period of time. For example, the AP 102 may randomly select a value (referred to as a random number) within a CW, i.e., [0, CW duration]. After detecting that the channel is idle in a DCF inter frame space (DIFS) period, the AP starts counting down, i.e., the random number is decreased by 1 for every slot time (usually 9 microseconds (µs)) of a channel idle period. Before the random number reaches 0, if the channel becomes busy during a slot time, the counting is paused. Afterwards, when the channel switches from busy to idle, the counting resumes. When the random number reaches 0, the AP starts sending data on the channel. Possible values for the CW include 31, 63, 127, 255, 511, and 1023, and corresponding backoff time periods may be 279 µs, 567 µs, 1143 µs, 2295 µs, 4599 µs, and 9207 µs, respectively. DCF refers to a distributed coordination function.

At S622, in a case that a window duration of the random backoff operation is greater than an NAV duration set for the primary channel, or a sum of the window duration of the random backoff operation and a duration required for data transmission is greater than the NAV duration set for the primary channel, current communication on the secondary channel is abandoned/or it is switched to the primary channel for state perception.

In a case that the window duration of the random backoff operation is greater than the NAV duration set for the primary channel, or the sum of the window duration of the random backoff operation and the duration required for the data transmission is greater than the NAV duration set for the primary channel, the NAV duration may have ended before the random number reaches 0. At this point, other WLAN devices may contend for the channel after the NAV duration ends, which may interfere with the communication between the AP 102 and the STA 101 on the secondary channel. Therefore, in this case, the current communication on the secondary channel is abandoned and/or it is switched to the primary channel for the state perception.

The method for channel switching in embodiments of the present disclosure may include at least one of above steps or embodiments. For example, S621 may be implemented as an independent embodiment, S622 may be implemented as an independent embodiment, and the combination of S621 and S622 may be implemented as an independent embodiment, but not limited thereto.

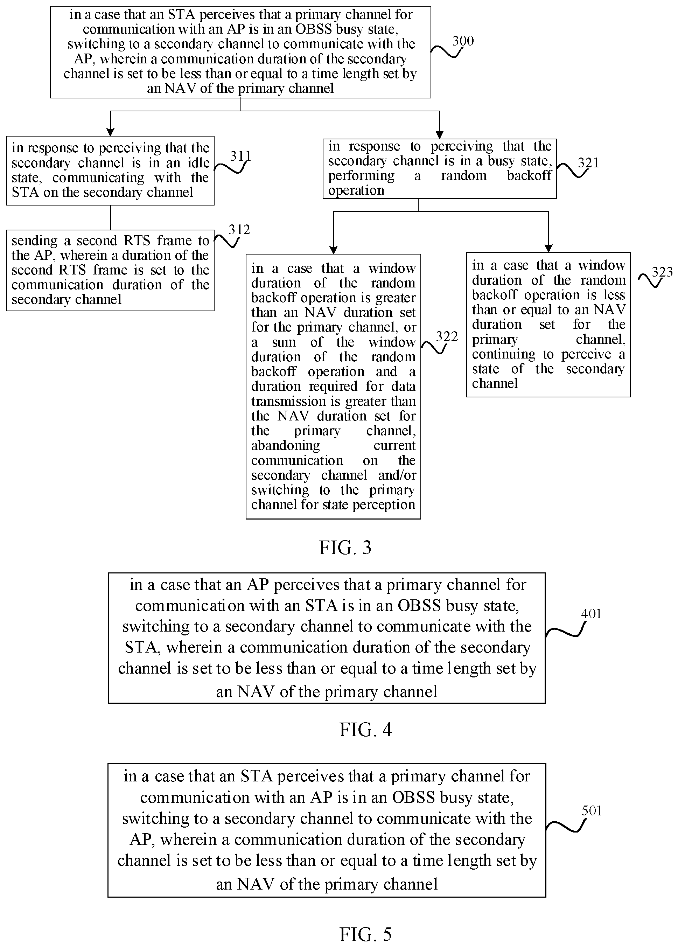

FIG. 3 is a third schematic diagram of an interaction of a method for channel switching according to embodiments of the present disclosure. As shown in FIG. 3, the method includes steps at S300 to S323.

At S300, in a case that an STA perceives that a primary channel for communication with an AP is in an OBSS busy state, it is switched to a secondary channel to communicate with the AP, in which a communication duration of the secondary channel is set to be less than or equal to a time length set by an NAV of the primary channel.

During a process of channel contention on a channel, if the primary channel is occupied by other devices in the same OBSS as the STA 101, for example, if other devices send a PPDU on the primary channel, the primary channel is in the OBSS busy state. The STA 101 may perceive that the primary channel is in the OBSS busy state via a CCA operation or an NAV operation. If the primary channel is in the OBSS busy state, to fully utilize the channel resource, it switches to the secondary channel to communicate with the AP, so as to improve throughput of the communication system and maximize utilization of the channel resource.

Furthermore, the STA 101 also sets the communication duration of the secondary channel to be less than or equal to the time length set by the NAV of the primary channel. After the STA 101 successfully contends for a channel, it may set, using an NAV method, the NAV in a duration field of an MAC frame header included in each frame it sends to notify other WLAN devices that a current WLAN device that obtains the channel may use the duration of the channel. Other WLAN devices that hear the frame may remain silent during the duration, i.e., stop contending for the channel. In this way, the communication duration of the secondary channel is set to be less than or equal to the time length set by the NAV of the primary channel. Since other WLAN devices remain silent and stop contending for the channel during the duration, they do not interfere with the communication between the AP 102 and the STA 101 on the secondary channel.

In embodiments of the present disclosure, the STA 101 perceives that the primary channel for the communication with the AP 102 is in the OBSS busy state and switches to the secondary channel to communicate with the AP 102, thus improving throughput of the communication system and maximizing utilization of a channel resource; and the communication duration of the secondary channel is set to be less than or equal to the time length set by the NAV of the primary channel, to prevent other WLAN devices from contending for a channel within the duration and interfering with the communication between the AP 102 and the STA 101 on the secondary channel.

After S300, S311 or S321 is executed based on whether the secondary channel is in the busy state.

At S311, in response to perceiving that the secondary channel is in an idle state, communication with the STA is performed on the secondary channel, and S312 is executed.

When determining to switch to the secondary channel for communication, the STA 101 continues to perceive whether the secondary channel is in the idle state. For example, it may perceive the busy state of the secondary channel via a CCA operation or an NAV operation. If the secondary channel is in the idle state, S312 is executed.

At S312, a second RTS frame is sent to the AP, in which a duration of the second RTS frame is set to the communication duration of the secondary channel.

After switching to the secondary channel, the STA 101 sends the second RTS frame to the AP. In the RTS frame, a duration (duration field) of the second RTS frame is set as the communication duration of the secondary channel to indicate the AP to send a data frame within the communication duration.

A duration indicated by the duration field of the second RTS frame is not greater than the NAV duration set for the primary channel, to prevent other WLAN devices from contending for the channel within the duration and interfering with the communication between the AP 102 and the STA 101 on the secondary channel.

At S321, in response to perceiving that the secondary channel is in a busy state, a random backoff operation is performed.

In response to perceiving that the secondary channel is in the busy state, the STA 101 delays an access and uses an exponential backoff algorithm to avoid a collision, and waits until a connection becomes idle again, thus forming access deferral. This process is a random backoff process.

Specifically, when performing the random backoff operation, the STA 101 does not send data immediately but starts sending the data after a period of time. For example, the STA 101 may randomly select a value (referred to as a random number) within a CW, i.e., [0, CW duration]. After detecting that the channel is idle in a DCF inter frame space (DIFS) period, the STA 101 starts counting down, i.e., the random number is decreased by 1 for every slot time (usually 9 microseconds (µs)) of a channel idle period. Before the random number reaches 0, if the channel becomes busy during a slot time, the counting is paused. Afterwards, when the channel switches from busy to idle, the counting resumes. When the random number reaches 0, the STA 101 starts sending data on the channel. Possible values for the CW include 31, 63, 127, 255, 511, and 1023, and corresponding backoff times may be 279 µs, 567 µs, 1143 µs, 2295 µs, 4599 µs, and 9207 µs, respectively. DCF refers to a distributed coordination function.

In some embodiments, performing the random backoff operation includes S322 or S323.

At S322, in a case that a window duration of the random backoff operation is greater than an NAV duration set for the primary channel, or a sum of the window duration of the random backoff operation and a duration required for data transmission is greater than the NAV duration set for the primary channel, current communication on the secondary channel is abandoned and/or it is switched to the primary channel for state perception.

In a case that the window duration of the random backoff operation is greater than the NAV duration set for the primary channel, or the sum of the window duration of the random backoff operation and the duration required for the data transmission is greater than the NAV duration set for the primary channel, the NAV duration may have ended before the random number reaches 0. At this point, other WLAN devices may contend for the channel after the NAV duration ends, which may interfere with the communication between the AP 102 and the STA 101 on the secondary channel. Therefore, in this case, in a case that the window duration of the random backoff operation is greater than the NAV duration set for the primary channel, or the sum of the window duration of the random backoff operation and the duration required for the data transmission is greater than the NAV duration set for the primary channel, the current communication on the secondary channel is abandoned and/or it is switched to the primary channel for the state perception.

At S323, in a case that a window duration of the random backoff operation is less than or equal to an NAV duration set for the primary channel, it is continued to perceive a state of the secondary channel.

When the window duration of the random backoff operation is less than or equal to the NAV duration set for the primary channel, other WLAN devices do not contend for the channel during the NAV duration and do not interfere with the communication between the AP 102 and the STA 101 on the secondary channel. Therefore, the AP 102 continues to perceive the state of the secondary channel.

In some embodiments, switching to the secondary channel to communicate with the AP includes: in a case that the NAV duration set for the primary channel is increased during communication with the AP on the secondary channel, continuing to communicate with the AP on the secondary channel after completion of current communication with the AP.

During the communication on the secondary channel, if an NAV setting of the primary channel changes, for example, it is determined, based on OBSS communication, that an NAV duration becomes longer, both parties may continue to communicate on the secondary channel after completion of the communication, so as to improve system throughput.

In some embodiments, the method further includes a step at S301.

At S301, during an initial association procedure, a first wireless frame sent by the AP is received, in which the first wireless frame includes first identification information, and the first identification information indicates capability information of the AP for communicating on the secondary channel; and the capability information includes whether the AP supports switching to the secondary channel for communication when the primary channel is in the OBSS busy state.

The first wireless frame includes at least one of a beacon frame, a probe response frame, an association response frame, or a re-association response frame. The embodiments of the present disclosure are not limited thereto.

During the initial association procedure, the AP 102 carries the first identification information in the first wireless frame, and the AP 102 indicates, via the first identification information, whether the AP 102 supports switching to the secondary channel for the communication when the primary channel is in the OBSS busy state. This facilitates the STA or other WLAN devices to determine, after receiving the first wireless frame, based on the first identification information, whether the AP 102 switches to the secondary channel for the communication when the primary channel is in the OBSS busy state.

In some embodiments, the method further includes a step at S302.

At S302, during an initial association procedure, a second wireless frame is sent to the AP, in which the second wireless frame includes second identification information, and the second identification information indicates capability information of the STA for communicating on the secondary channel; and the capability information includes whether the STA supports switching to the secondary channel for communication when the primary channel is in the OBSS busy state.

The second wireless frame includes at least one of a probe request frame, an association request frame, or a re-association request frame. The embodiments of the present disclosure are not limited thereto.

During the initial association procedure, the second wireless frame is sent to the AP 102. The STA indicates, via the second identification information, whether the STA supports the switching to the secondary channel for the communication when the primary channel is in the OBSS busy state. This facilitates the AP 102 or other WLAN devices to determine, after receiving the second wireless frame, based on the second identification information, whether the STA switches to the secondary channel for the communication when the primary channel is in the OBSS busy state.

In some embodiments, the method further includes a step at S303.

At S303, during the initial association procedure, parameter information of the secondary channel is negotiated with the STA via the second wireless frame.

The parameter information of the secondary channel may be negotiated during an association procedure, for example, it may be carried in an UHR information element or a UHR operation information element. For example, in the second wireless frame, the parameter information of the secondary channel may be implicitly indicated by the second identification information in the UHR information element as a parameter established between the AP and the STA during the initial association procedure. Taking a bandwidth parameter as an example, if the first identification information indicates that the AP supports switching to the secondary channel for the communication when the primary channel is in the OBSS busy state, and a bandwidth of the secondary channel negotiated between the AP and the STA during the initial association procedure is 20 MHz, the bandwidth of the secondary channel is also 20 MHz.

In some embodiments, the method further includes a step at S304.

At S304, after completion of the initial association procedure, parameter information of the secondary channel is negotiated with the STA via a newly defined wireless frame.

The AP and the STA may define a new wireless frame to negotiate the parameter information of the secondary channel.

In some embodiments, the parameter information of the secondary channel includes bandwidth information, and the bandwidth information is an operating bandwidth established during the initial association procedure.

For example, if the bandwidth of the secondary channel negotiated between the AP and the STA during the initial association procedure is 20 MHz, the bandwidth of the secondary channel is also 20 MHz.

The method for channel switching in embodiments of the present disclosure may include at least one of above steps or embodiments. For example, S300 may be implemented as an independent embodiment, S311 may be implemented as an independent embodiment, S312 may be implemented as an independent embodiment, S321 may be implemented as an independent embodiment, S322 may be implemented as an independent embodiment, S323 may be implemented as an independent embodiment, S301 may be implemented as an independent embodiment, S302 may be implemented as an independent embodiment, S303 may be implemented as an independent embodiment, and S304 may be implemented as an independent embodiment. The combination of S300 and S311 may be implemented as an independent embodiment, the combination of S300 and S321 may be implemented as an independent embodiment, the combination of S311 and S312 may be implemented as an independent embodiment, the combination of S321 and S322 may be implemented as an independent embodiment, the combination of S321 and S323 may be implemented as an independent embodiment, and the combination of S301 and S302 may be implemented as an independent embodiment, but not limited thereto.

In some embodiments, reference may be made to other optional implementations described before or after the description corresponding to FIG. 3.

FIG. 7 is a fourth schematic diagram of an interaction of a method according to embodiments of the present disclosure. As shown in FIG. 7, the method includes steps at S721 to S722.

At S721, in response to perceiving that the secondary channel is in a busy state, a random backoff operation is performed.

In response to perceiving that the secondary channel is in the busy state, the STA 101 delays an access and uses an exponential backoff algorithm to avoid a collision, and waits until a connection becomes idle again, thus forming access deferral, and this process is a random backoff process.

Specifically, when performing the random backoff operation, the STA 101 does not send data immediately but starts sending the data after a period of time. For example, the STA 101 may randomly select a value (referred to as a random number) within a CW, i.e., [0, CW duration]. After detecting that the channel is idle in a DCF inter frame space (DIFS) period, the STA 101 starts counting down, i.e., the random number is decreased by 1 for every slot time (usually 9 microseconds (µs)) of a channel idle period. Before the random number reaches 0, if the channel becomes busy during a slot time, the counting is paused. Afterwards, when the channel switches from busy to idle, the counting resumes. When the random number reaches 0, the STA 101 starts sending data on the channel. Possible values for the CW include 31, 63, 127, 255, 511, and 1023, and corresponding backoff periods may be 279 µs, 567 µs, 1143 µs, 2295 µs, 4599 µs, and 9207 µs, respectively. DCF refers to a distributed coordination function.

At S722, in a case that a window duration of the random backoff operation is greater than an NAV duration set for the primary channel, or a sum of the window duration of the random backoff operation and a duration required for data transmission is greater than the NAV duration set for the primary channel, current communication on the secondary channel is abandoned and/or it is switched to the primary channel for state perception.

In a case that the window duration of the random backoff operation is greater than the NAV duration set for the primary channel, or the sum of the window duration of the random backoff operation and the duration required for the data transmission is greater than the NAV duration set for the primary channel, the NAV duration may have ended before the random number reaches 0. At this point, other WLAN devices may contend for the channel after the NAV duration ends, which may interfere with the communication between the AP 102 and the STA 101 on the secondary channel. Therefore, in this case, in a case that the window duration of the random backoff operation is greater than the NAV duration set for the primary channel, or the sum of the window duration of the random backoff operation and the duration required for the data transmission is greater than the NAV duration set for the primary channel, the current communication on the secondary channel is abandoned and/or it is switched to the primary channel for the state perception.

The method for channel switching in embodiments of the present disclosure may include at least one of above steps or embodiments. For example, S721 may be implemented as an independent embodiment, S722 may be implemented as an independent embodiment, and the combination of S621 and S622 may be implemented as an independent embodiment, but not limited thereto.

In some embodiments, names of information are not limited to those recorded in . Terms such as "information", "message", "signal", "signaling", "report", "configuration", "indication", "instruction", "command", "channel", "parameter", "domain", "field", "symbol", "codepoint", "bit", "data", "program", "chip", etc., may be used interchangeably.

In some embodiments, terms such as "moment", "time point", "time", "time position", etc. may be used interchangeably; and terms such as "duration", "time interval", "time window", "window", "period", etc. may be used interchangeably.

In some embodiments, terms such as "wireless access scheme", "waveform", etc. may be used interchangeably.

In some embodiments, terms such as "certain", "predetermined", "preset", "set", "indicated", "a/an", "any", "first", etc. may be used interchangeably. "certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited thereto.

In some embodiments, determination or judgment may be performed using a value represented by 1 bit (0 or 1), or using boolean values represented by true or false, or by numerical comparison (e.g., comparison with a predetermined value), which is not limited herein.

In some embodiments, "does not expect to receive" may be interpreted as not receiving on a time-domain resource and/or a frequency-domain resource, or as not performing subsequent processing on the received data after receiving the data; and "does not expect to send" may be interpreted as not sending, or as sending but not expecting a receiver to respond to content that is sent.

FIG. 4 is a first flowchart of a method for channel switching according to embodiments of the present disclosure.

As shown in FIG. 4, the method may be applied to the AP 102, and includes a step at S401.

At S401, in a case that an AP perceives that a primary channel for communication with an STA is in an OBSS busy state, it is switched to a secondary channel to communicate with the STA, in which a communication duration of the secondary channel is set to be less than or equal to a time length set by an NAV of the primary channel.

Optionally, in embodiments of the present disclosure, switching to the secondary channel to communicate with the STA includes: in response to perceiving that the secondary channel is in an idle state, communicating with the STA on the secondary channel; or, in response to perceiving that the secondary channel is in a busy state, performing a random backoff operation.

Optionally, in embodiments of the present disclosure, communicating with the STA on the secondary channel includes: sending a first RTS frame to the STA, in which a duration of the first RTS frame is set to the communication duration of the secondary channel.

Optionally, in embodiments of the present disclosure, performing the random backoff operation includes: in a case that a window duration of the random backoff operation is greater than an NAV duration set for the primary channel, or a sum of the window duration of the random backoff operation and a duration required for data transmission is greater than the NAV duration set for the primary channel, abandoning current communication on the secondary channel and/or switching to the primary channel for state perception; or, in a case that a window duration of the random backoff operation is less than or equal to an NAV duration set for the primary channel, continuing to perceive a state of the secondary channel.

Optionally, in embodiments of the present disclosure, switching to the secondary channel to communicate with the STA includes: in a case that the NAV duration set for the primary channel is increased during communication with the STA on the secondary channel, continuing to communicate with the STA on the secondary channel after completion of current communication with the STA.

Optionally, in embodiments of the present disclosure, the method further includes: during an initial association procedure, sending a first wireless frame to the STA, in which the first wireless frame includes first identification information, and the first identification information indicates capability information of the AP for communicating on the secondary channel; and the capability information includes whether the AP supports switching to the secondary channel for communication when the primary channel is in the OBSS busy state.

Optionally, in embodiments of the present disclosure, the method further includes: during an initial association procedure, receiving a second wireless frame sent by the STA, in which the second wireless frame includes second identification information, and the second identification information indicates capability information of the STA for communicating on the secondary channel, and the capability information includes whether the STA supports switching to the secondary channel for communication when the primary channel is in the OBSS busy state.

Optionally, in embodiments of the present disclosure, the method further includes at least one of: during the initial association procedure, negotiating parameter information of the secondary channel with the STA via the first wireless frame; or, after completion of the initial association procedure, negotiating parameter information of the secondary channel with the STA via a newly defined wireless frame.

Optionally, in embodiments of the present disclosure, the parameter information of the secondary channel includes bandwidth information, and the bandwidth information is an operating bandwidth established during the initial association procedure.

FIG. 5 is a second flowchart of a method for channel switching according to embodiments of the present disclosure.

As shown in FIG. 5, the method may be applied to a STA 104, and includes a step at S501.

At S501, in a case that an STA perceives that a primary channel for communication with an AP is in an OBSS busy state, it is switched to a secondary channel to communicate with the AP, in which a communication duration of the secondary channel is set to be less than or equal to a time length set by an NAV of the primary channel.

Optionally, in embodiments of the present disclosure, switching to the secondary channel to communicate with the AP includes: in response to perceiving that the secondary channel is in an idle state, communicating with the AP on the secondary channel; or, in response to perceiving that the secondary channel is in a busy state, performing a random backoff operation.

Optionally, in embodiments of the present disclosure, communicating with the AP on the secondary channel includes: sending a second RTS frame to the AP, in which a duration of the second RTS frame is set to the communication duration of the secondary channel.

Optionally, in embodiments of the present disclosure, performing the random backoff operation includes: in a case that a window duration of the random backoff operation is greater than an NAV duration set for the primary channel, or a sum of the window duration of the random backoff operation and a duration required for data transmission is greater than the NAV duration set for the primary channel, abandoning current communication on the secondary channel and/or switching to the primary channel for state perception; or, in a case that a window duration of the random backoff operation is less than or equal to an NAV duration set for the primary channel, continuing to perceive a state of the secondary channel.

Optionally, in embodiments of the present disclosure, switching to the secondary channel to communicate with the AP includes: in a case that the NAV duration set for the primary channel is increased during communication with the AP on the secondary channel, continuing to communicate with the AP on the secondary channel after completion of current communication with the AP.

Optionally, in embodiments of the present disclosure, the method further includes: during an initial association procedure, receiving a first wireless frame sent by the AP, in which the first wireless frame includes first identification information, and the first identification information indicates capability information of the AP for communicating on the secondary channel; and the capability information includes whether the AP supports switching to the secondary channel for communication when the primary channel is in the OBSS busy state.

Optionally, in embodiments of the present disclosure, the method further includes: during an initial association procedure, sending a second wireless frame to the AP, in which the second wireless frame includes second identification information, and the second identification information indicates capability information of the STA for communicating on the secondary channel; and the capability information includes whether the STA supports switching to the secondary channel for communication when the primary channel is in the OBSS busy state.

Optionally, in embodiments of the present disclosure, the method further includes at least one of: during the initial association procedure, negotiating parameter information of the secondary channel with the AP via the second wireless frame; or, after completion of the initial association procedure, negotiating parameter information of the secondary channel with the AP via a newly defined wireless frame.

Optionally, in embodiments of the present disclosure, the parameter information of the secondary channel includes bandwidth information, and the bandwidth information is an operating bandwidth established during the initial association procedure.

Embodiments of the present disclosure also provide an apparatus for implementing any one of the above methods. For example, an apparatus is provided, including units or modules for performing steps executed by the terminal in any one of the above methods. For another example, another apparatus is provided, including units or modules for performing steps executed by the network device (e.g., an access network device, a core network function node, a core network device, etc.) in any one of the above methods.

It should be understood that the division of units or modules in the above apparatuses is merely a division of logical functions. In actual implementations, the units may be fully or partially integrated into a single physical entity or may be physically separated. In addition, the units or modules in the apparatus may be implemented in the form of a processor invoking software. For example, the apparatus includes a processor, which is connected to a memory for storing instructions. The processor invokes the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of the processor invoking software, or fully implemented in the form of the hardware circuit, or partially implemented in the form of the processor invoking software and the remaining part implemented in the form of the hardware circuit.

In embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units or the modules. In addition, the hardware circuit may be designed specifically for artificial intelligence and may be understood as an ASIC, such as a neural network processing unit (NPU), a tensor processing unit (TPU), or a deep learning processing unit (DPU).

FIG. 8 is a block diagram of an AP according to embodiments of the present disclosure. As shown in FIG. 8, an AP 800 may include: a first switching module 801.

In some embodiments, the first switching module 801 is configured to: in a case that the AP perceives that a primary channel for communication with an STA is in an OBSS busy state, switch to a secondary channel to communicate with the STA, in which a communication duration of the secondary channel is set to be less than or equal to a time length set by an NAV of the primary channel.

Optionally, the first switching module 801 is configured to perform at least one of communication steps executed by the AP 102 in any one of the above methods (for example, S200, S211, S212, S221, S621, S222, S622, S223, or S401, but not limited thereto), which are not repeated here.

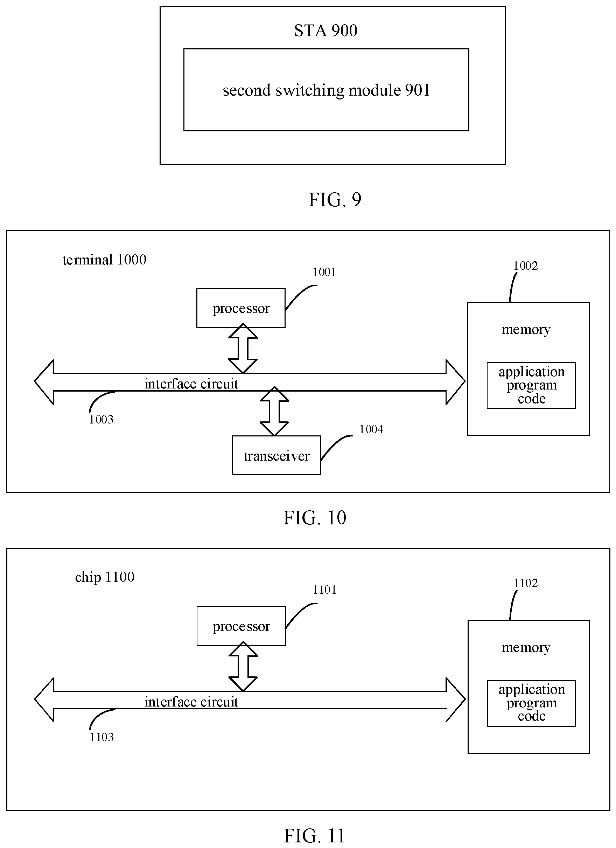

FIG. 9 is a block diagram of an STA according to embodiments of the present disclosure. As shown in FIG. 9, a STA 900 may include: a second switching module 901.

In some embodiments, the second switching module 901 is configured to: in a case that an STA perceives that a primary channel for communication with an AP is in an OBSS busy state, switch to a secondary channel to communicate with the AP, in which a communication duration of the secondary channel is set to be less than or equal to a time length set by an NAV of the primary channel.

Optionally, the second switching module 901 is configured to perform at least one of communication steps executed by the STA 101 in any one of the above methods (for example, S300, S311, S312, S321, S721, S322, S722, S323, or S501, but not limited thereto), which are not repeated here.

FIG. 10 is a block diagram of a terminal 1000 (e.g., a user equipment, etc.) according to embodiments of the present disclosure. The terminal 1000 may be a chip, a chip system, or a processor, etc., that supports the network device to implement any one of the above methods, or it may be a chip, a chip system, or a processor, etc., that supports the terminal to implement any one of the above methods. The terminal 1000 may be used to implement the methods described in the above method embodiments. For details, reference may be made to the description in the above method embodiments.

As shown in FIG. 10, the terminal 1000 includes one or more processors 1001. The processor 1001 may be a general-purpose processor or a special-purpose processor. For example, it may be a baseband processor or a central processor. The baseband processor is configured to process communication protocols and communication data, and the central processor is configured to control communication devices (such as base stations, baseband chips, terminals, terminal chips, DU or CU, etc.) to execute computer programs and process program data. The terminal 1000 is configured to perform any one of the above methods.

In some embodiments, the terminal 1000 further includes one or more memories 1002 for storing instructions. Optionally, all or part of the memories 1002 may also be located outside the terminal 1000.

In some embodiments, the terminal 1000 further includes one or more transceivers 1004. When the terminal 1000 includes one or more transceivers 1004, the transceiver 1004 performs at least one of communication steps such as sending and/or receiving in the above methods (e.g., S201, S202, S203, S204, S301, S302, S303, or S304, but not limited thereto), and the processor 1001 performs at least one of other steps (e.g., S200, S211, S212, S221, S621, S222, S622, S223, S401, S300, S311, S312, S321, S721, S322, S722, S323, or S501, but not limited thereto).

In some embodiments, a transceiver may include a receiver and/or a transmitter, which may be separate or integrated. Optionally, terms such as transceiver, transceiver unit, transceiver machine, transceiver circuit, etc. may be used interchangeably; terms such as transmitter, sending unit, transmitter machine, sending circuit, etc. may be used interchangeably; and terms such as receiver, receiving unit, receiver machine, receiving circuit, etc. may be used interchangeably.

In some embodiments, the terminal 1000 may include one or more interface circuits 1003. The interface circuit 1003 is connected to the memory 1002 and may be used to receive signals from the memory 1002 or other devices, or send signals to the memory 1002 or other devices. For example, the interface circuit 1003 may read instructions stored in the memory 1002 and send the instructions to the processor 1001.

The terminal 1000 in the description of the above embodiments may be a communication device, such as a user equipment, but the scope of the terminal 1000 described in the disclosure is not limited thereto, and the structure of the terminal 1000 may not be limited by FIG. 10. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 11 is a block diagram of a chip 1100 according to embodiments of the present disclosure. For the case where the terminal 1000 may be a chip or a chip system, reference may be made to the schematic diagram of the structure of the chip 1100 shown in FIG. 11, but it is not limited thereto.

The chip 1100 includes one or more processors 1101. The chip 1100 is configured to perform any one of the above methods.

In some embodiments, the chip 1100 further includes one or more interface circuits 1103. The interface circuit 1103 is connected to a memory 1102 and may be used to receive signals from the memory 1102 or other devices, and/or send signals to the memory 1102 or other devices. For example, the interface circuit 1103 may read instructions stored in the memory 1102 and send the instructions to the processor 1101.

In some embodiments, the interface circuit 1103 performs at least one of communication steps such as sending and/or receiving in the above methods (e.g., S201, S202, S203, S204, S301, S302, S303, or S304, but not limited thereto), and the processor 1101 performs at least one of other steps (e.g., S200, S211, S212, S221, S621, S222, S622, S223, S401, S300, S311, S312, S321, S721, S322, S722, S323, or S501, but not limited thereto).

In some embodiments, terms such as interface circuit, interface, transceiver pin, transceiver, etc. may be used interchangeably.

In some embodiments, the chip 1100 further includes one or more memories 1102 for storing instructions. Optionally, all or part of the memories 1102 may be located outside the chip 1100.

The present disclosure also provides a storage medium for storing instructions. When the instructions are running on the terminal 1000, the terminal 1000 is caused to implement any one of the above methods. Optionally, the storage medium is an electronic storage medium. Optionally, the storage medium is a computer-readable storage medium, but is not limited thereto, and it may also be a storage medium readable by other devices. Optionally, the storage medium may be a non-transitory storage medium, but is not limited thereto, and it may also be a transitory storage medium.

The present disclosure also provides a program product. When the program product is executed by the terminal 1000, the terminal 1000 is caused to implement any one of the above methods. Optionally, the program product is a computer program product.

The present disclosure also provides a computer program. When the computer program is executed on a computer, the computer is caused to implement any one of the above methods.

## Claims

1. A method for channel switching, comprising:
in a case that an access point (AP) perceives that a primary channel for communication with a station (STA) is in an overlapping basic service set (OBSS) busy state, switching to a secondary channel to communicate with the STA, wherein a communication duration of the secondary channel is set to be less than or equal to a time length set by a network allocation vector (NAV) of the primary channel.

2. The method of claim 1, wherein switching to the secondary channel to communicate with the STA comprises:
in response to perceiving that the secondary channel is in an idle state, communicating with the STA on the secondary channel;
or,
in response to perceiving that the secondary channel is in a busy state, performing a random backoff operation.

3. The method of claim 2, wherein communicating with the STA on the secondary channel comprises:
sending a first request-to-send (RTS) frame to the STA, wherein a duration of the first RTS frame is set to the communication duration of the secondary channel.

4. The method of claim 2, wherein performing the random backoff operation comprises:
in a case that a window duration of the random backoff operation is greater than an NAV duration set for the primary channel, or a sum of the window duration of the random backoff operation and a duration required for data transmission is greater than the NAV duration set for the primary channel, abandoning current communication on the secondary channel and/or switching to the primary channel for state perception; or,
in a case that a window duration of the random backoff operation is less than or equal to an NAV duration set for the primary channel, continuing to perceive a state of the secondary channel.

5. The method of any one of claims 1 to 4, wherein switching to the secondary channel to communicate with the STA comprises:
in a case that the NAV duration set for the primary channel is increased during communication with the STA on the secondary channel, continuing to communicate with the STA on the secondary channel after completion of current communication with the STA.

6. The method of claim 1, further comprising:
during an initial association procedure, sending a first wireless frame to the STA, wherein the first wireless frame comprises first identification information, and the first identification information indicates capability information of the AP for communicating on the secondary channel; and the capability information comprises whether the AP supports switching to the secondary channel for communication when the primary channel is in the OBSS busy state.

7. The method of claim 6, further comprising at least one of:
during the initial association procedure, negotiating parameter information of the secondary channel with the STA via the first wireless frame; or,
after completion of the initial association procedure, negotiating parameter information of the secondary channel with the STA via a newly defined wireless frame.

8. The method of claim 7, wherein the parameter information of the secondary channel comprises bandwidth information, and the bandwidth information is an operating bandwidth established during the initial association procedure.

9. The method of claim 1, further comprising:
during an initial association procedure, receiving a second wireless frame sent by the STA, wherein the second wireless frame comprises second identification information, and the second identification information indicates capability information of the STA for communicating on the secondary channel, and the capability information comprises whether the STA supports switching to the secondary channel for communication when the primary channel is in the OBSS busy state.

10. A method for channel switching, comprising:
in a case that a station (STA) perceives that a primary channel for communication with an access point (AP) is in an overlapping basic service set (OBSS) busy state, switching to a secondary channel to communicate with the AP, wherein a communication duration of the secondary channel is set to be less than or equal to a time length set by a network allocation vector (NAV) of the primary channel.

11. The method of claim 10, wherein switching to the secondary channel to communicate with the AP comprises:
in response to perceiving that the secondary channel is in an idle state, communicating with the AP on the secondary channel;
or,
in response to perceiving that the secondary channel is in a busy state, performing a random backoff operation.

12. The method of claim 11, wherein communicating with the AP on the secondary channel comprises:
sending a second request-to-send (RTS) frame to the AP, wherein a duration of the second RTS frame is set to the communication duration of the secondary channel.

13. The method of claim 11, wherein performing the random backoff operation comprises:
in a case that a window duration of the random backoff operation is greater than an NAV duration set for the primary channel, or a sum of the window duration of the random backoff operation and a duration required for data transmission is greater than the NAV duration set for the primary channel, abandoning current communication on the secondary channel and/or switching to the primary channel for state perception; or,
in a case that a window duration of the random backoff operation is less than or equal to an NAV duration set for the primary channel, continuing to perceive a state of the secondary channel.

14. The method of any one of claims 10 to 13, wherein switching to the secondary channel to communicate with the AP comprises:
in a case that the NAV duration set for the primary channel is increased during communication with the AP on the secondary channel, continuing to communicate with the AP on the secondary channel after completion of current communication with the AP.

15. The method of claim 10, further comprising:
during an initial association procedure, receiving a first wireless frame sent by the AP, wherein the first wireless frame comprises first identification information, and the first identification information indicates capability information of the AP for communicating on the secondary channel; and the capability information comprises whether the AP supports switching to the secondary channel for communication when the primary channel is in the OBSS busy state.

16. The method of claim 10, further comprising:
during an initial association procedure, sending a second wireless frame to the AP, wherein the second wireless frame comprises second identification information, and the second identification information indicates capability information of the STA for communicating on the secondary channel; and the capability information comprises whether the STA supports switching to the secondary channel for communication when the primary channel is in the OBSS busy state.

17. The method of claim 16, further comprising at least one of:
during the initial association procedure, negotiating parameter information of the secondary channel with the AP via the second wireless frame; or,
after completion of the initial association procedure, negotiating parameter information of the secondary channel with the AP via a newly defined wireless frame.

18. The method of claim 17, wherein the parameter information of the secondary channel comprises bandwidth information, and the bandwidth information is an operating bandwidth established during the initial association procedure.

19. An access point (AP), comprising:
a first switching module, configured to: in a case that the AP perceives that a primary channel for communication with a station (STA) is in an overlapping basic service set (OBSS) busy state, switch to a secondary channel to communicate with the STA, wherein a communication duration of the secondary channel is set to be less than or equal to a time length set by a network allocation vector (NAV) of the primary channel.

20. A station (STA), comprising:
a second switching module, configured to: in a case that a station (STA) perceives that a primary channel for communication with an access point (AP) is in an overlapping basic service set (OBSS) busy state, switch to a secondary channel to communicate with the AP, wherein a communication duration of the secondary channel is set to be less than or equal to a time length set by a network allocation vector (NAV) of the primary channel.

21. An access point (AP), comprising:
one or more processors,
wherein the AP is configured to implement the method of any one of claims 1 to 9.

22. A station (STA), comprising:
one or more processors,
wherein the STA is configured to implement the method of any one of claims 10 to 18.

23. A communication system, comprising an access point (AP) and a station (STA), wherein the AP is configured to implement the method of any one of claims 1 to 9, and the STA is configured to implement the method of any one of claims 10 to 18.

24. A storage medium for storing instructions that, when executed by a communication device, cause the communication device to implement the method of any one of claims 1 to 9, or the method of any one of claims 10 to 18.
